Europäisches Patentamt

European Patent Office

Office européen des brevets

(19)

(11) **EP 0 673 129 B1**

(12) **EUROPÄISCHE PATENTSCHRIFT**

(45) Veröffentlichungstag und Bekanntmachung des Hinweises auf die Patenterteilung:
**21.07.2004 Patentblatt 2004/30**

(51) Int Cl.⁷: **H04B 17/00**, H04Q 7/36

(21) Anmeldenummer: **95103590.6**

(22) Anmeldetag: **13.03.1995**

(54) **Verfahren und Anordnung zur Bestimmung des C/I-Verhältnisses für Gleich- oder Nachbarkanalstörungen in digitalen Mobilfunknetzen**

Method and apparatus for determining the C/I ratio for co-channel or adjacent channel interference in digital mobile radio networks

Procédé et dispositif pour déterminer le rapport porteuse sur interférence pour l'interférence d'un même canal ou d'un canal adjacent dans un réseau numérique radio mobile

(84) Benannte Vertragsstaaten:
**AT BE CH DE DK ES FR GB GR IE IT LI LU MC NL PT SE**
Benannte Erstreckungsstaaten:
**LT SI**

(30) Priorität: **18.03.1994 DE 4409455**

(43) Veröffentlichungstag der Anmeldung:
**20.09.1995 Patentblatt 1995/38**

(73) Patentinhaber: **T-Mobile Deutschland GmbH 53227 Bonn (DE)**

(72) Erfinder: **Gaspard, Ingo, Dipl.-Ing. D-64372 Ober-Ramstadt (DE)**

(74) Vertreter: **Riebling, Peter, Dr.-Ing. Patentanwalt Postfach 31 60 88113 Lindau (DE)**

(56) Entgegenhaltungen:
**WO-A-93/22845**      **US-A- 4 561 114**

- **KOZONO S: "Co-channel interference measurement method for mobile communication" IEEE TRANSACTIONS ON VEHICULAR TECHNOLOGY, FEB. 1987, USA, Bd. VT-36, Nr. 1, Seiten 7-13, XP002109221 ISSN: 0018-9545**

## Beschreibung

Die Erfindung betrifft ein Verfahren zur Bestimmung des C/I Verhältnisses für Gleich- oder Nachbarkanalstörer in digitalen Mobilfunknetzen und dient der direkten Messung des Verhältnisses zwischen Nutzsignal und unerwünschtem Signal bei Gleich- und Nachbarkanalstörern in digitalen Mobilfunknetzen, die eine Phasenmodulation der hochfrequenten Trägerschwingung im Übertragungsband benutzen. Das erfindungsgemäße Verfahren findet damit vorzugsweise in digitale Mobilfunknetzen nach GSM-Standard Anwendung.

Unter C/I Verhältnis wird dabei das Verhältnis der Empfangsleistungen zwischen dem gewünschten Nutzsignal C (Carrier) und einem unerwünschten Störsignal I (Interferer) am Empfangsort verstanden.

Es ist bisher kein Verfahren bekannt, das es ermöglicht, auf direktem Wege die Bestimmung des C/I Verhältnisses in digitalen Mobilfunknetzen vorzunehmen. Unter direktem Wege soll hier verstanden werden, daß ohne Dekodierung der in den Aussendungen enthaltenen Informationen, allein aus der meßtechnischen Erfassung hochfrequenter Größen und deren Verarbeitung, d. h. der Auswertung der Empfangsleistung, die Bestimmung des C/I Verhältnisses durchgeführt wird.

Bisher ist es bekannt, daß in GSM Mobilfunknetzen zunächst für einen Empfänger der Zusammenhang zwischen Empfangsleistung RXLEV und Bitfehlerrate RXQUAL in Form von Kalibriermessungen für den Fall ohne Gleichkanalstörung, bzw. bei definiertem Einfluß von Gleichkanalstörern, festgestellt wird. Man erhält so durch aufwendige Labormessungen Meßpunkte des Zusammenhangs C/I = f(RXLEV; RXQUAL). Durch diese empirische Vorgehensweise kann dann der so vermessene Empfänger zur C/I Bestimmung bei Feldmessungen eingesetzt werden. Vereinfacht ausgedrückt, erkennt man ein "schlechtes" C/I Verhältnis (d. h. ein Störer ist vorhanden) daran, daß bei gleichzeitig hoher Empfangsleistung eine "schlechte" Empfangsqualität, d. h. eine hohe Bitfehlerrate, vorliegt.

Daneben sind Verfahren zur C/I Bestimmung für Gleichkanalstörer in analogen Mobilfunknetzen, die eine Frequenzmodulation der hochfrequenten Trägerschwingung benutzen, bekannt. Ein solches Verfahren wird dem Artikel KOZONO, Shigern: "Co-Channel Interference Measurement Method for Mobile Communikation", in: IEEE Transactions on Vehicular Technology, Vol. VT 36, No. 1 February 1987, Seiten 7 bis 13 beschrieben.

Das bisher übliche Verfahren hat den gravierenden Nachteil, daß der Schluß von einer "schlechten" Empfangsqualität bei gleichzeitig hoher Empfangsleistung auf das Vorliegen einer Gleichkanalstörung nur dann richtig ist, wenn ausgeschlossen werden kann, daß andere qualitätsvermindernde Gründe als eine Gleichkanalstörung während der Messung vorliegen. Gerade dies kann jedoch nicht gewährleistet werden, da bei der Messung Parameter, wie Geschwindigkeit und zugrunde liegendes Fadingprofil, bekannt sein müßten. Daneben unterliegt die RXQUAL Messung und die RXLEV Messung Fehlern entsprechend der GSM Recommendation 05.08, die für die gewünschte Messung nicht vernachlässigt werden können. Das bisher verwendete Verfahren ist sehr aufwendig, da zunächst, wie oben beschrieben, umfangreiche Laboruntersuchungen zum Zusammenhang C/I = f(RXLEV;RXQUAL) der Anwendung vorangestellt werden müssen.

Der erfindungsgemäßen Lösung liegt die Aufgabe zugrunde, ein im Vergleich zu den bekannten Lösungen wesentlich einfacheres und aussagefähigeres Verfahren für die Messung des C/I Verhältnisses bei Gleichkanal- sowie bei Nachbarkanalstörern zu entwickeln. Dabei soll auf die bisher üblichen aufwendigen Kalibriermessungen verzichtet werden. Desweiteren dürfen dabei keine Eingriffe in den Wirknetzbetrieb erfolgen. Typische Eigenschaften des GSM Mobilfunknetzes, wie z. B. die TDMA Zeitrahmenstruktur, sollen richtig in das neue Verfahren einbezogen werden.

Diese Aufgabe wird erfindungsgemäß durch die Merkmale des Patentanspruchs 1 gelöst.

Das erfindungsgemäße Verfahren setzt eine Phasenmodulation der hochfrequenten Trägerschwingung im Übertragungsband voraus. Das von der Empfangsantenne 1 am Empfangsort empfangene Signal wird in einem ersten Arbeitsschritt einer Hüllkurvendemodulation unterzogen. Danach wird das der Hüllkurvendemodulation unterzogene Signal während einer definierten Meßzeit Tges in bestimmten Zeitabständen $\Delta T$ abgetastet und digitalisiert. Während der Meßzeit Tges werden in Zeitabständen von $\Delta T$ demgemäß N Paare von Abtastwerten der Einhüllenden R(t) zu den Zeiten ti und ti + $\Delta T$, mit i = 1,2...N (im folgenden auch i = 1-N) digitalisiert und als fortlaufende Folge von 1-N des Quadrats der Einhüllenden $R^2(t)$ gespeichert. Aus den gespeicherten 1-N Werten des Quadrats der Einhüllenden $R^2$(t) Werten werden die Hilfsgrößen X' und Y' gebildet. Die Bildung der Hilfsgröße X' basiert auf den 1-N Paaren von Abtastwerten der Einhüllenden R(t), die während der Meßzeit Tges zu den Zeiten ti und ti + $\Delta T$ erfaßt und als fortlaufende Folge mit i = 1-N digitalisiert wurden. Die N Werte von R(t) zu den Zeitpunkten ti; i = 1-N werden anschließend quadriert, die 1-N Einzelquadrate aufsummiert und die Gesamtsumme durch die Anzahl N dividiert. Das Ergebnis dieser Rechnung wird mit X' bezeichnet. Die Hilfsgröße X' ist proportional zur mittleren Summenleistung der an den Empfängereingang geführten Einzelsignale, Nutzsignale s(t) und Störsignale i(t), während der Meßzeit Tges. Die zweite Hilfsgröße Y' wird ebenfalls aus den digitalisierten Abtastwerten der Einhüllenden R(t) ermittelt. Zunächst werden die N Differenzen quadrierter und im zeitlichen Abstand $\Delta T$ zueinander liegender Abtastwerte der Hüllkurve gebildet. Diese Differenzen werden quadriert und aufsummiert. Die Gesamtsumme N der quadrierten Differenzen wird durch die Anzahl N dividiert. Die so erhaltene Größe Y' ist bei passender Wahl der Gesamtmeßzeit $T_{ges}$ und der Zeitdifferenz $\Delta T$ proportional zum vierfachen Produkt der Einzelleistungen der Signale s(t) und i(t). Die Hilfsgröße Y' wird mittels eines Korrekturfaktors (k) vor der weiteren Verarbeitung korrigiert. Der Korrekturfaktor k beinhaltet einen Fehlerterm, dessen Wert typisch für den Wert von ∆T und das verwendete Phasenmodulationsverfahren ist.

Die für die Durchführung des erfindungsgemäßen Verfahres benötigte Meßanordnung besteht aus einem Meßempfänger 2 zur Hüllkurvendemodulation, der an die Empfangsantenne 1 am Empfangsort angeschaltet wird. Das Ausgangssignal des Meßempfängers 2 gelangt zur weiteren Verarbeitung auf einen dem Meßempfänger 2 nachgeordneten Analog/Digitalwandler 3, der das Ausgangssignal des Meßempfängers in Zeitabständen von ∆T abtastet und durch Quantisierung einer weiteren Verarbeitung in einem dem Analog/Digitalwandler 3 nachgeordneten Computer 4 aufbereitet.

Die erfindungsgemäße Lösung wird anhand eines Ausführungsbeispiels näher erläutert.

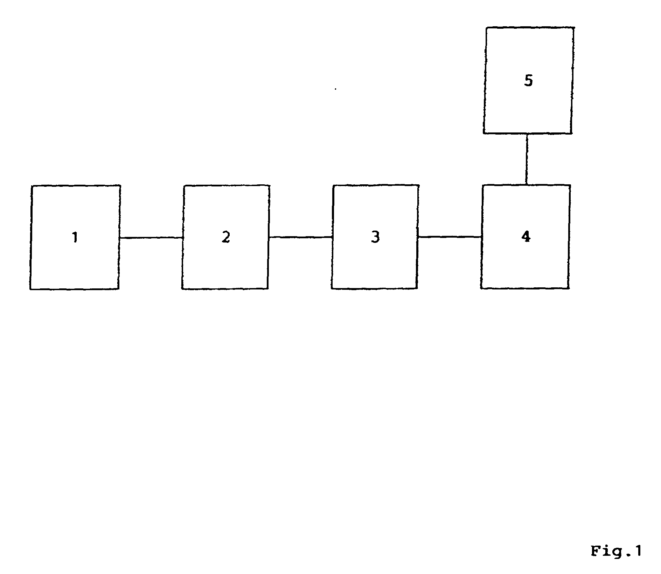

Dabei ist in Fig. 1 ein Blockschaltbild der erfindungsgemäßen Anordnung dargestellt.

Das erfindungsgemäße Verfahren zur C/I Bestimmung setzt eine Phasenmodulation der hochfrequenten Trägerschwingung im Übertragungsband voraus. Bei dem in Fig. 1 dargestellten Blockschaltbild der erfindungsgemäßen Anordnung bezeichnet Block 1 die Empfangsantenne am Empfangsort. Block 2 stellt einen Meßempfänger dar, der zur Hüllkurvendemodulation des von der Empfangsantenne gelieferten Signals verwendet wird.

Das Ausgangssignal des Meßempfängers 2 gelangt zur weiteren Verarbeitung auf einen dem Meßempfänger 2 nachgeordneten Analog/Digitalwandler 3, der das Ausgangssignal des Meßempfängers 2 in Zeitabständen von ∆T während einer Meßzeit von $T_{ges}$ abtastet und durch Quantisierung einer weiteren Verarbeitung durch einen dem Analog/Digitalwandler 3 nachgeordneten Computer 4 zugänglich macht. Eine Möglichkeit zur Realisierung wird in der Verwendung eines Personalcomputers gesehen. Dabei besteht der Analog/Digitalwandler 3 aus einer handelsüblichen, im Personalcomputer integrierten Steckkarte, die eine maximale Abtastfrequenz von 200kHz zuläßt. Eine maximale Abtastfrequenz von 200kHz entspricht einer minimalen Zeit ∆T zwischen zwei benachbarten Abtastzeitpunkten von 5µs.

Im folgenden werden die theoretischen Grundlagen des erfindungsgemäßen Verfahrens näher erläutert: Das an der Empfangsantenne 1 empfangene Signal des gewünschten Trägers (Nutzsignal C) läßt sich am Empfangsort zu

$$s(t) = S(t)\sin[2\pi f_0 t + \varphi(t)] \tag{1}$$

beschreiben, worin $\varphi(t)$ die zu übertragende Information beinhaltet und sich im speziellen für die im GSM Mobilfunknetz verwendete Modulation zu

$$\varphi(t) = \sum_{i=0}^{N} a_i \pi h \int_{-\infty}^{t-iT} g(r)dr \tag{2}$$

ausdrücken läßt. In Gleichung (2) repräsentiert g(r) den Sendegrundimpuls (Gaußimpuls), h nimmt für GMSK den Wert 0,5 an (Modulationsindex), i stellt den Symbolindex dar und $a_i \, \varepsilon \, (+1,-1)$ sind die zu übertragenden Symbole. Infolge von Fadingeinflüssen ist die Amplitude des empfangenen Signals zeitabhängig, was durch S(t) zum Ausdruck gebracht wird.

Im folgenden soll nur der schwierigere Fall eines Gleichkanalstörers theoretisch betrachtet werden. Das neue Verfahren ist jedoch in gleicher Weise auch für den Fall einer Nachbarkanalstörung anwendbar. Es gilt für das Signal eines Gleichkanalstörers am Empfangsort die Notation:

$$i(t) = I(t)\sin(2\pi f_0 t + \alpha(t) + \phi_0) \tag{3}$$

mit $\phi_0$ als Nullphasenwinkel. Auch für das Interferersignal gilt eine Zeitabhängigkeit der Amplitude infolge von Fadingeinflüssen, die durch I(t) zum Ausdruck gebracht wird.

Für das Summensignal aus s(t) und i(t) gilt:

$$r(t) = s(t)+i(t) = \sqrt{S^2(t)+I^2(t)+2S(t)I(t)\cos\psi(t)}$$
$$\cdot\sin[2\pi f_0 t+\varphi)(t)+\arctan\left(\frac{S(t)\sin\psi(t)}{I(t)+S(t)\sin\psi(t)}\right)] \tag{4}$$

mit

$$\psi(t) = \alpha(t) - \varphi(t) + \phi_0 \tag{5}$$

Im folgenden wird das Quadrat der Einhüllenden, das sich zu

$$R^2(t) = S^2(t) + I^2(t) + 2S(t)I(t)\cos\psi(t) \tag{6}$$

ergibt, betrachtet. Das Quadrat der Einhüllenden nach Gleichung (6) enthält die Summanden $S^2(t) + {}^2(t)$, die mit

$$f_s \approx \frac{v}{\lambda} \tag{7}$$

fluktuieren, sowie den Summanden $2S(t)I(t)\cos\psi(t)$ , der mit einer Frequenz

$$\frac{d}{dt}[\psi(t)] >> f_s \tag{8}$$

infolge der Phasenmodulation von Nutz- und Störsignal fluktuiert. Wegen Gleichung (8) kann der Term $S^2(t)+I^2(t)$ vom Term $2S(t)I(t)\cos\psi(t)$ separiert werden und die C/I Bestimmung durchgeführt werden.

Die Durchführung der C/I Bestimmung basiert auf der im folgende beschriebenen Vorgehensweise:
Dabei wird vorausgesetzt, daß $\psi(t)$ gleichverteilt im Intervall $[0,2\pi]$ ist. Zur vereinfachten Schreibweise sei

$$X = \overline{S^2(t)} + \overline{I^2(t)} \tag{9}$$

und

$$Y = 2\overline{(2S(t)I(t)\cos\psi(t))^2} = 4\overline{S^2(t)I^2(t)}, \tag{10}$$

worin der Oberstrich die Operation der zeitlichen Mittelwertbildung bedeutet. Durch Auflösung von Gleichung (9) und Gleichung (10) folgt für das zu bestimmende C/I Verhältnis:

$$C/I = \frac{\overline{S^2(t)}}{\overline{I^2(t)}} = \frac{X + \sqrt{X^2 - Y}}{X - \sqrt{X^2 - Y}} \tag{11}$$

Meßtechnisch werden folgende Summen durch Digitalisierung und Weiterverarbeitung mittels Personalcomputer gebildet:

$$X' = \frac{1}{N}\sum_{i=1}^{N} R^2(t_i) = \overline{S^2(t)} + \overline{I^2(t)} + \overline{2S(t)I(t)\cos\psi(t)} \tag{12}$$

und ferner unter Berücksichtigung des sich bei $t_i + \Delta T$ ergebenden Quadrats der Einhüllenden

$$Y' = \frac{1}{N} \sum_{i=1}^{N} [R^2(t_i) - R^2(t_i + \Delta T)]^2$$

$$= \overline{Z^2(t)} + 4\overline{Z(t)[S(t)I(t)\cos\psi(t) - S(t+\Delta T)I(t+\Delta T)\cos\psi(t+\Delta T)]}$$

$$+4\overline{[S^2(t)I^2(t)\cos^2\psi(t)}$$

$$-2\overline{S(t)I(t)S(t+\Delta T)I(t+\Delta T)\cos\psi(t)\cos\psi(t+\Delta T)]}$$

$$+4\overline{S^2(t+\Delta T)I^2(t+\Delta T)\cos^2\psi(t+\Delta T)} \qquad (13)$$

mit

$$Z(t) = S^2(t) - S^2(t+\Delta T) + I^2(t) - I^2(t+\Delta T). \qquad (14)$$

Der Parameter $\Delta T$ ist dabei so zu wählen, daß die Bedingungen $S(t) \approx S(t+\Delta T)$, sowie $I(t) \approx I(t+\Delta T)$ und $\overline{\cos\psi(t)\cos\psi(t+\Delta T)} \approx 0$ erfüllt sind. Sind diese Bedingungen erfüllt, so wird $Y' = Y$ und $X' = X$, so daß die C/I Bestimmung nach Gleichung 11 erfolgen kann.

Untersuchungen ergaben, daß die Bedingungen $S(t) \approx S(t+\Delta T)$ und $I(t) \approx (t+\Delta T)$ für $\Delta T \leq 100\mu s$ ausreichend gut für eine Anwendung im GSM Netz erfüllt werden. Außerdem wird für genügend lange Meßzeiten ($\geq$ 1s) der Term $2\overline{S(t)I(t)\cos\psi(t)}$ aus Gleichung (12) annähernd zu Null, so daß $X' = X$ erfüllt ist. Daneben zeigten Messungen mit Signalen, die nach GSM moduliert sind, daß die Bedingung $\overline{\cos\psi(t)\cos\psi(t+\Delta T)} \approx 0$ für Zeiten $\Delta T \geq 5\mu s$ nicht zu erfüllen ist. Jedoch läßt sich Gleichung (13) für Zeiten $\Delta T \leq 100\mu s$ auf den Ausdruck

$$Y' = 4\overline{S^2(t)I^2(t)} \ [1-2\overline{\cos\psi(t)\cos\psi(t+\Delta T)]} \qquad (15)$$

vereinfachen. Hierin beschreibt $2\overline{\cos\psi(t)\cos\psi(t+\Delta T)}$ einen "Fehlerterm", dessen Wert typisch für den Wert von $\Delta T$ und das verwendete Phasenmodulationsverfahren ist. Der Wert dieses Fehlerterms läßt sich durch Labormessungen zu k bestimmen.

Der Fehlerterm k beinhaltet ein Maß für die Korrelation bzw. Ähnlichkeit von Phasendifferenzen $\psi(t)$ und $\psi(t+\Delta T)$. Beispielsweise für $\Delta T$ wird

$$k = 2 \ \overline{\cos\psi(t)\cos\psi(t+\Delta T)} = 2 \ \overline{\cos^2\psi(t)} = 1$$

für $\Delta T > 0$ wird $k < 1$
für $\Delta T \rightarrow \infty$ wird $k = 0$.

Das heißt, wenn zwei Phasendifferenzen zwischen s(t) und i(t) unendlich lange auseinander liegen ($\Delta T \rightarrow \infty$), dann haben sie keine Korrelation zueinander.

Mit dem Fehlerterm k kann Y'korrigiert werden, so daß

$$Y = \frac{1}{1 - k} \ Y' \qquad (16)$$

gilt und Gleichung (11) zur Bestimmung des C/I Verhältnisses angewandt werden kann.

Die Bestimmung des C/I Verhältnisses soll anhand eines möglichen Ausführungsbeispiels näher erläutert werden. Bei der Bestimmung des C/I Verhältnisses wird so vorgegangen, daß zunächst während einer Meßzeit von z. B. 4 s alle Abtastwerte des Analog/Digitalwandlers 2 im Computer 3 gespeichert werden. Bei einer Abtastrate von 200 kHz sind dies insgesamt 4 s · 200000 s$^{-1}$ = 800000 Werte des Quadrats der Einhüllenden R$^2$(t). Zunächst werden mit diesen 1-N = 800000 Werten die Summen gemäß Gleichung (12) für X' und gemäß Gleichung (13) für Y' im Computer 4 berechnet. Für Gleichung (13) ergibt sich der Parameter $\Delta$T aus dem zeitlichen Abstand benachbarter Abtastwerte zu $\Delta$T = 5,µs. Danach werden die Ergebnisse dieser Berechnung für X' und Y' unter der Berücksichtigung des Korrekturfaktors k gemäß Gleichung (16) für Y' in Gleichung (11) eingesetzt und das C/I Verhältnis im Computer 4 berechnet. Sind diese Berechnungen abgeschlossen und z. B. für eine spätere Nachverarbeitung gespeichert, wobei die Speicherung vorzugsweise im Computer 4 erfolgt, so kann mit einer erneuten Aufzeichnung von Abtastwerten mit anschließender Berechnung des C/I Verhältnisses fortgefahren werden.

Eine weitere zweckmäßige Ausgestaltung der erfindungsgemäßen Lösung wird dadurch erreicht, daß an den Computer 4 zusätzlich ein GPS-Empfänger (Global Positioning System) 5 angeschaltet wird. Zusätzlich zum C/I Verhältnis wird die durch den GPS-Empfänger gelieferte Ortsinformation gespeichert, so daß die für die Anwendung wichtige Möglichkeit der ortsabhängigen Darstellung des C/I Verhältnisses erreicht wird, da das neue Verfahren vorzugsweise aus einem beweglichen Meßfahrzeug heraus betrieben wird.

Das erfindungsgemäße Verfahren zeichnet sich dadurch aus, daß die Messung des C/I Verhältnisses ohne aufwendige Kalibriermessungen, sondern nur aus der gemessenen Empfangsleistung als Funktion der Zeit und einer analytischen Berechnung des C/I Verhältnisses aus den Funktionswerten dieser Zeitfunktion resultiert. Daneben werden typische Eigenschaften des GSM Mobilfunknetzes, wie TDMA Zeitrahmenstruktur, richtig vom erfindungsgemäßen Verfahren verarbeitet. Das C/I Verhältnis wird nicht über den Umweg von Hilfsgrößen, wie Bitfehlerrate (RXQUAL), sondern aus den direkten Einflußgrößen, nämlich aus dem Zeitverlauf der resultierenden Empfangsleistung, die sich aus Anteilen des Carriers C und des Interferers I am Empfangsort ergibt, bestimmt. Das neue Verfahren kommt dabei ohne Eingriffe in den Wirknetzbetrieb aus. Ein weiterer Vorteil des neuen Verfahrens ergibt sich aus der Tatsache, daß nur ein minimaler Hardwareaufwand zur Durchführung der Messung erforderlich ist.

**Patentansprüche**

1. Verfahren zur Bestimmung des C/I Verhältnisses eines Empfangssignals für Gleich- oder Nachbarkanalstörer in digitalen Mobilfunknetzen bei phasenmodulierten hochfrequenten Trägerschwingungen im Übertragungspfad, wobei

das an einer Empfangsantenne (1) ankommende Empfangssignal einer Hüllkurvendemodulation unterzogen wird, wobei danach die Einhüllende R(t) während einer definierten Messzeit Tges zu Zeiten ti und ti + $\Delta$T mit i=1,2...N abgetastet wird, und die entstehenden Abtastwerte digitalisiert und quadriert werden,
wobei die quadrierten Abtastwerte als fortlaufende Folge von N Wertepaaren des Quadrats der Einhüllenden R$^2$(t) gespeichert werden,
wobei zum einen durch Mittelung von N gespeicherten Wertepaaren eine Größe X'gebildet wird, die proportional zur mittleren Summenleistung der an den Eingang eines Messempfängers geführten Einzelleistungen der Nutzsignale s(t) und der Störsignale i(t) während der Messzeit Tges ist, und zum anderen durch Mittelung der Quadrate der Differenzen zwischen den Werten der gespeicherten Wertepaare eine Größe Y' gebildet wird, die bei entsprechender Wahl der Gesamtmeßzeit Tges und der Zeitdifferenz $\Delta$T idealerweise proportional zum vierfachen Produkt der Einzelleistungen der Nutzsignale s(t) und der Störsignale i(t) ist, **dadurch gekennzeichnet,**
**daß** aus der ermittelten Größe Y' durch Multiplikation mit einem Korrekturfaktor (1/1-k) eine Größe Y berechnet wird, wobei der Wert des Korrekturfaktors durch Labormessungen bestimmt wird und typisch für den Wert von $\Delta$T und das verwendete Phasenmodulationsverfahren ist, und
**daß** im Anschluß daran das C/I Verhältnis nach der Gleichung C/I = [X'+ (X'$^2$-Y)$^{\frac{1}{2}}$] / [X'- (X'$^2$-Y)$^{\frac{1}{2}}$] berechnet wird.

2. Anordnung zur Bestimmung des C/I Verhältnisses für Gleich- oder Nachbarkanalstörer für digitale Mobilfunknetze nach einem Verfahren gemäß Anspruch 1, **dadurch gekennzeichnet, dass** an die Empfangsantenne (1) am Empfangsort der Meßempfänger (2) angeschaltet ist, der über einen Analog/Digitalwandler (3) mit einem Computer (4) verbunden ist.

3. Anordnung nach Anspruch 2, **dadurch gekennzeichnet, daß** bei der Messung aus einem beweglichen Meßfahrzeug heraus an den Computer (4) ein GPS-Empfänger (5) angeschaltet ist, der an den Computer (4) eine Ortsinformation zur ortsabhängigen Darstellung des C/I Verhältnisses liefert.

**Claims**

1. Process for determining the C/I ratio of a received signal for cochannel or adjacent-channel interferers in digital mobile radio communications networks for phase-modulated high-frequency carrier waves in the transmission path, wherein the received signal incoming at a receiving antenna (1) is subjected to envelope demodulation, wherein the envelope R(t) is then sampled during a defined measuring time Tges at times ti and ti + ΔT where i=1, 2 ... N, and the resulting sampling values are digitalised and squared, wherein the squared sampling values are stored as a consecutive sequence of N value pairs of the square of the envelopes $R^2(t)$, wherein firstly a value X' is formed by averaging N stored value pairs, and is proportional to the average sum capacity of the individual capacities of the useful signals s(t) and the interfering signals i(t) passed to the input of a measuring receiver during measuring time Tges, and secondly a value Y' is formed by averaging the squares of the differences between the values of the stored value pairs, and is ideally proportional to four times the product of the individual capacities of the useful signals s(t) and the interfering signals i(t) with appropriate selection of the total measuring time Tges and the time difference ΔT, **characterised in that** a value Y is calculated from the ascertained value Y' by multiplying with a correction factor (1/1-k), wherein the value of the correction factor is determined by laboratory measurements and is typical for the value of ΔT and the phase-modulation process used, and **in that** subsequently the C/I ratio is calculated according to the equation C/I = $[X' + (X'^2-Y)^{1/2}] / [X' - (X'^2-Y)^{1/2}]$.

2. Arrangement for determining the C/I ratio for cochannel or adjacent-channel interferers for digital mobile radio communications networks by a process according to claim 1, **characterised in that** the measuring receiver (2), which is connected to a computer (4) via an analog/digital converter (3), is connected to the receiving antenna (1) at the receiving location.

3. Arrangement according to claim 2, **characterised in that** when measuring from a mobile measuring vehicle, a GPS receiver (5), which delivers local information for the location-dependent representation of the C/I ratio to the computer (4), is connected to the computer (4).

**Revendications**

1. Procédé pour définir le rapport porteuse/brouillage C/I d'un signal de réception pour des brouilleurs d'un même canal ou de canaux adjacents dans des réseaux radiotéléphoniques mobiles numériques, en présence d'ondes porteuses haute fréquence à modulation de phase dans la trajectoire de transmission,

selon lequel le signal de réception qui arrive au niveau d'une antenne de réception (1) est soumis à une détection d'enveloppe,

puis l'enveloppe R(t) est explorée pendant une durée de mesure définie Tges à des moments ti et ti+ΔT, avec i=1,2...N, et les valeurs d'exploration obtenues sont numérisées et élevées au carré,

les valeurs d'exploration élevées au carré sont mises en mémoire sous la forme d'une suite continue de N paires de valeurs du carré de l'enveloppe $R^2(t)$,

on forme d'une part, grâce à un calcul de la moyenne de N paires de valeurs mises en mémoire, une grandeur X' qui est proportionnelle à la puissance totale moyenne des puissances individuelles, amenées à l'entrée d'un récepteur de mesure, des signaux utiles s(t) et des signaux brouilleurs i(t) pendant la durée de mesure Tges, et on forme d'autre part, grâce à un calcul de la moyenne des carrés des différences entre les valeurs des paires de valeurs mises en mémoire, une grandeur Y' qui, avec un choix approprié de la durée de mesure totale Tges et de la différence de temps Δt, est idéalement proportionnelle à quatre fois les puissances individuelles des signaux utiles s(t) et des signaux brouilleurs i(t),

**caractérisé en ce qu'**une grandeur Y est calculée à partir de la grandeur déterminée Y', par multiplication avec un facteur de correction (1/1-k), la valeur du facteur de correction étant définie par des mesures en laboratoire et étant typique de la valeur de ΔT et du procédé de modulation de phase utilisé,

et **en ce que**, après cela, le rapport porteuse/brouillage C/I est calculé suivant l'équation

$$C/I = [X'+(X'^2-Y)^{1/2}] / [X'-(X'^2-Y)^{1/2}].$$

2. Dispositif pour définir le rapport porteuse/brouilleur C/I pour des brouilleurs d'un même canal ou de canaux adjacents dans des réseaux radiotéléphoniques mobiles numériques selon un procédé selon la revendication 1, **caractérisé en ce que** le récepteur de mesure (2) est raccordé à l'antenne de réception (1), sur le lieu de réception, lequel récepteur de mesure (2) est relié à un ordinateur (4) par l'intermédiaire d'un convertisseur analogique/numérique (3).

3. Dispositif selon la revendication 2, **caractérisé en ce que** lors de la mesure à partir d'un véhicule de mesure mobile, un récepteur GPS (5) est raccordé à l'ordinateur (4), lequel récepteur GPS (5) fournit à l'ordinateur (4) une information de lieu destinée à une représentation du rapport C/I en fonction du lieu.

Fig.1